# EUROPÄISCHE PATENTANMELDUNG

(11) **EP 1 347 641 A1**
(43) Veröffentlichungstag der Anmeldung: **24.09.2003**
(21) Anmeldenummer: 02006212.1
(22) Anmeldetag: 19.03.2002
(51) Int. Cl.: H04N 5/74, G02B 27/01

(54) **Projektionsfreie Anzeigevorrichtung**

(71) Anmelder: SIEMENS AKTIENGESELLSCHAFT, 80333 München (DE)
(72) Erfinder: Neddermeyer, Andreas, 81675 München (DE)

(57) **Zusammenfassung**

Die Erfindung betrifft eine projektionsfreie Anzeigevorrichtung (A) mit einer Lichtführungseinheit (1) zum Führen von Lichtstrahlen (L) und einer Beleuchtungseinheit (2) zum Erzeugen und Einbringen der Lichtstrahlen (L) in die Lichtführungseinheit (1). Die Lichtführungseinheit (1) weist eine Vielzahl von seriell hintereinander angeordneten Transmissions-/Reflexionselementen (3) auf, die von einer Ansteuereinheit (4, 5) selektiv in einen lichtdurchlässigen oder reflektierenden Zustand gesteuert werden können. Auf diese Weise erhält man eine gleichzeitig aktiv leuchtende sowie durchsichtige Anzeigevorrichtung, welche darüber hinaus frei formbar ist.

## Beschreibung

Die vorliegende Erfindung bezieht sich auf eine projektionsfreie Anzeigevorrichtung und insbesondere auf ein flaches durchsichtiges aktiv leuchtendes Display.

Bei Anzeigevorrichtungen bzw. sogenannten Displays unterscheidet man üblicherweise zwischen projektionsfreien Anzeigevorrichtungen und Anzeigevorrichtungen mit Projektionstechnik unterschieden.

Anzeigevorrichtungen mit Projektionstechnik können beispielsweise auf einer durchsichtigen oder reflektierenden Fläche mittels Projektion darzustellende Informationen sichtbar machen. Nachteilig ist hierbei jedoch, dass insbesondere durchsichtige Anzeigevorrichtungen bei starkem Gegenlicht die dargestellten Informationen nicht mehr erkennbar darstellen können und/oder Probleme bei der Projektion (z. B. Fokussierung, Anordnung der Projektionsquelle, usw.) auftreten.

Herkömmliche projektionsfreie Anzeigevorrichtungen wie die zur Zeit verwendeten TFT-Displays sind demgegenüber nicht gleichzeitig durchsichtig und beleuchtet, da zur Darstellung entweder eine Lichtquelle hinter der Anzeigevorrichtung benötigt wird oder eine reflektive Schicht einfallendes Licht wieder zurückwirft.

Ferner sind projektionsfreie Anzeigevorrichtungen bekannt, die eine Lichtführungseinheit zum Führen von Lichtstrahlen aufweisen und eine seitlich angeordnete Beleuchtungseinheit zum Erzeugen und Einbringen der Lichtstrahlen in die Lichtführungseinheit, wodurch die Abmessungen der Anzeigevorrichtung wesentlich verringert werden können.

Demgegenüber liegt der Erfindung die Aufgabe zu Grunde eine projektionsfreie Anzeigevorrichtung zu schaffen, die sowohl durchsichtig als auch aktiv leuchtend ist.

Erfindungsgemäß wird diese Aufgabe durch die Merkmale des Patentanspruchs 1 gelöst.

Insbesondere durch die Verwendung einer Vielzahl von Transmissions-/Reflexionselementen, die seriell im Strahlengang einer Lichtführungseinheit angeordnet und zum Auskoppeln der Lichtstrahlen aus der Lichtführungseinheit ansteuerbar sind, und einer Ansteuereinheit zum selektiven Ansteuern der Vielzahl von Transmissions-/Reflexionselementen in einen lichtdurchlässigen oder reflektierenden Zustand erhält man eine projektionsfreie Anzeigevorrichtung, die sowohl durchsichtig sein kann als auch aktiv leuchtend ist. Neben neuartigen Computermonitoren oder Fernsehbildschirmen lassen sich insbesondere Anzeigevorrichtungen realisieren, die in Windschutzscheiben von Kraftfahrzeugen, Flugzeugen oder Visieren von Helmen usw. integriert sind. Im Gegensatz zu Projektions-Anzeigevorrichtungen ist die Anzeige hierbei nicht von Gegenlicht oder Störungen im Projektions-Zwischenraum beeinflusst.

Vorzugsweise werden als Transmissions-/Reflexionselemente lichtdurchlässige bzw. reflektierende Mikrospiegel oder sogenannte "Asil-Spiegel" verwendet, die eine jeweilige Auskopplung im Wesentlichen senkrecht zur Lichtführungseinheit ermöglichen.

Die Lichtführungseinheit kann hierbei einen Hohlraum aufweisen oder aus einem die Spiegel- bzw. Transmissions-/Reflexionselemente aufweisendes Substrat bestehen.

Die Beleuchtungseinheit ist beispielsweise in die Lichtführungseinheit integriert, wodurch sich besonders kleine Abmessungen realisieren lassen.

Zur Realisierung der Anzeigevorrichtung können streifenförmig ausgebildete Lichtführungseinheiten spalten- oder zellenförmig angeordnet sein, wobei die Transmissions-/Reflexionselemente zeilen- oder spaltenförmig angesteuert werden. In gleicher Weise kann jedoch auch nur eine spiralförmig angeordnete Lichtführungseinheit die Anzeigevorrichtung ausbilden und die Lichtführungseinheit eine Oberflächenkrümmung aufweisen, wodurch beliebige Displayformen insbesondere für Windschutzscheiben, Visiere von Helmen oder Brillen möglich sind.

Vorzugsweise ist die Reflektivität der Transmissions-/Reflexionselemente gleichmäßig von 0% bis 100% einstellbar, wodurch nicht nur eine Lichtintensität der dargestellten Informationen, sondern auch ein Abblendeffekt eines eventuell vorhandenen Gegenlichts realisiert werden kann.

Ferner kann die Beleuchtungseinheit in Abhängigkeit von der Ansteuerung der Transmissions-/Reflexionselemente gesteuert werden, wodurch ein eventuell auftretender Lichtverlust durch die Vielzahl von Transmissions-/Reflexionselementen ausgeglichen werden kann und ein gleichmäßig helles Bild für die gesamte Anzeigevorrichtung realisierbar ist.

In den weiteren Unteransprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:
Figur 1 eine vereinfachte Blockdarstellung eines Systems mit einer erfindungsgemäßen projektionsfreien Anzeigevorrichtung;
Figuren 2A und 2B vereinfachte Schnittansichten der projektionsfreien Anzeigevorrichtung gemäß einem ersten und zweiten Ausführungsbeispiel;
Figur 2C eine vereinfachte Draufsicht der projektionsfreien Anzeigevorrichtung gemäß dem ersten oder zweiten Ausführungsbeispiel;
Figur 3 eine vereinfachte Darstellung zur Veranschaulichung einer Herstellung einer in der Anzeigevorrichtung gemäß dem ersten Ausführungsbeispiel verwendeten Lichtführungseinheit;
Figur 4 eine vereinfachte Draufsicht der projektionsfreien Anzeigevorrichtung gemäß einem dritten Ausführungsbeispiel;
Figur 5 eine vereinfachte Seitenansicht der projektionsfreien Anzeigevorrichtung gemäß einem vierten Ausführungsbeispiel; und
Figuren 6 und 7 vereinfachte Seitenansichten zur Veranschaulichung einer Farbrealisierung in der erfindungsgemäßen projektionsfreien Anzeigevorrichtung.

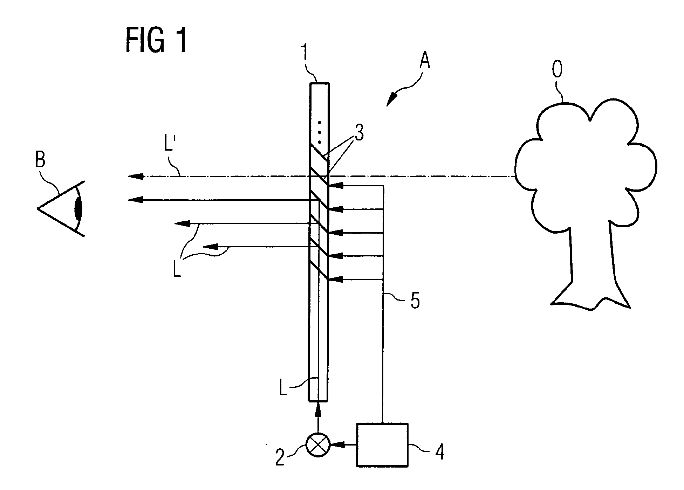

Figur 1 zeigt eine vereinfachte Seitenansicht eines Systems mit einer erfindungsgemäßen projektionsfreien Anzeigevorrichtung A, wie sie beispielsweise als Fensterscheibe, die zusätzlich als Computermonitor oder Fernsehbildschirm funktioniert, verwendet werden kann. Alternative Einsatzgebiete für die projektionsfreie Anzeigevorrichtung sind beispielsweise Windschutzscheiben für Pkws, Lkws, Flugzeuge oder auch Visiere von Schutzhelmen, wie z.B. Motorradhelme, Pilotenhelme usw.

Gemäß Figur 1 befindet sich die projektionsfreie Anzeigevorrichtung A beispielsweise zwischen einem Beobachter B und einem Objekt O und ist vorzugsweise zumindest teilweise lichtdurchlässig. Die projektionsfreie Anzeigevorrichtung A besteht hierbei aus einer beispielsweise lichtdurchlässigen Lichtführungseinheit 1 zum Führen von Lichtstrahlen L, die von einer Beleuchtungseinheit 2 erzeugt und seitlich in die Lichtführungseinheit 1 eingebracht werden. Im Strahlengang der Lichtstrahlen L bzw. der Lichtführungseinheit 1 befinden sich eine Vielzahl von seriell bzw. hintereinander angeordneten Transmissions-/Reflexionselementen bzw. Spiegeln 3, die zum Auskoppeln der Lichtstrahlen L aus der Lichtführungseinheit 1 ansteuerbar sind. Die Ansteuerung wird hierbei durch eine Ansteuereinheit 4 mit zugehörigen Ansteuerleitungen 5, die zu jedem einzelnen Transmissions-/Reflexionselement 3 führen, in Abhängigkeit von einer Bildinformation realisiert.

Genauer gesagt kann durch die Ansteuereinheit 4 bzw. die Ansteuerleitungen 5 eine Reflektivität bzw. ein lichtdurchlässiger oder lichtreflektierender Zustand der Vielzahl von Transmissions-/Reflexionselementen 3 selektiv derart eingestellt werden, dass an den jeweiligen Elementen ein Lichtstrahl L aus der Lichtführungseinheit 1 ausgekoppelt wird oder der Lichtstrahl durch das Element hindurchtritt und eine derartige Auskopplung nicht stattfindet. Bei geschickter Ansteuerung, beispielsweise zyklischer Ansteuerung der Vielzahl von Transmissions-/Reflexionselementen kann auf diese Weise ein Bild in der projektionsfreien Anzeigevorrichtung A für den Betrachter B erzeugt werden, welches aktiv leuchtet und im Wesentlichen unabhängig von einem Gegenlicht bzw. dem vom Objekt O abgestrahlten Licht L' ist.

Ein Abschattungseffekt kann hierbei beispielsweise durch die Zeitdauer der Freischaltung der jeweiligen Transmissions-/Reflexionselemente in einen transparenten Zustand eingestellt werden. In gleicher Weise kann ein derartiger Abschattungseffekt des Gegenlichts L' auch durch eine entsprechende Ansteuerung der Transmissions-/Reflexionselemente 3 erfolgen, sofern deren Reflektivität gleichmäßig zwischen einem Wert von 0% und 100% einstellbar ist. Andererseits kann über die Zeitdauer bzw. die Reflektivität auch eine Helligkeit der dargestellten Information bzw. des dargestellten Bildes in der projektionsfreien Anzeigevorrichtung A eingestellt werden, da hierdurch die ausgekoppelten Lichtstrahlen L eine unterschiedliche Intensität aufweisen können.

Darüber hinaus kann die Ansteuereinheit 4 zusätzlich auch die Beleuchtungseinheit 2 ansteuern, wodurch sich eine zusätzliche Helligkeitseinstellung ergibt. Da beim Durchgang durch die Vielzahl von Transmissions-/Reflexionselementen 3 zumindest ein Teil des Lichtstrahls absorbiert wird, erhält das oberste Transmissions-/Reflexionselement 3 in der Regel weniger Licht bzw. eine geringere Intensität als das unterste bzw. der Beleuchtungseinheit am nächsten liegende Transmissions-/Reflexionselement. Bei einer unkompensierten Ansteuerung würden sich daher im von der projektionsfreien Anzeigevorrichtung A dargestellten Bild Helligkeitsunterschiede von oben nach unten bzw. vom beleuchtungsfernen zum beleuchtungsnahen Element 3 ergeben. Zum Ausgleich dieser Helligkeitsunterschiede wird daher vorzugsweise die Beleuchtungseinheit in Abhängigkeit von der Ansteuerung der Transmissions-/Reflexionselemente 3 gesteuert, so dass bei der Ansteuerung der entfernt liegenden Elemente 3 eine höhere Lichtintensität an der Beleuchtungseinheit 2 eingestellt wird als bei der Ansteuerung von beleuchtungsnahen Elementen 3.

Auf diese Weise erhält man ein Flachdisplay, das sowohl durchsichtig als auch aktiv leuchtend sein kann. Insbesondere in Kraftfahrzeugen, Flugzeugen oder Schutzhelmen, die üblicherweise durchsichtige Sichtschutzscheiben aufweisen, können somit Informationen wie z.B. Geschwindigkeit, Tankfüllung, Navigationssystem, Nachtsichtverbesserungen usw. ohne wesentliche Beeinträchtigung einer Sicht dargestellt werden.

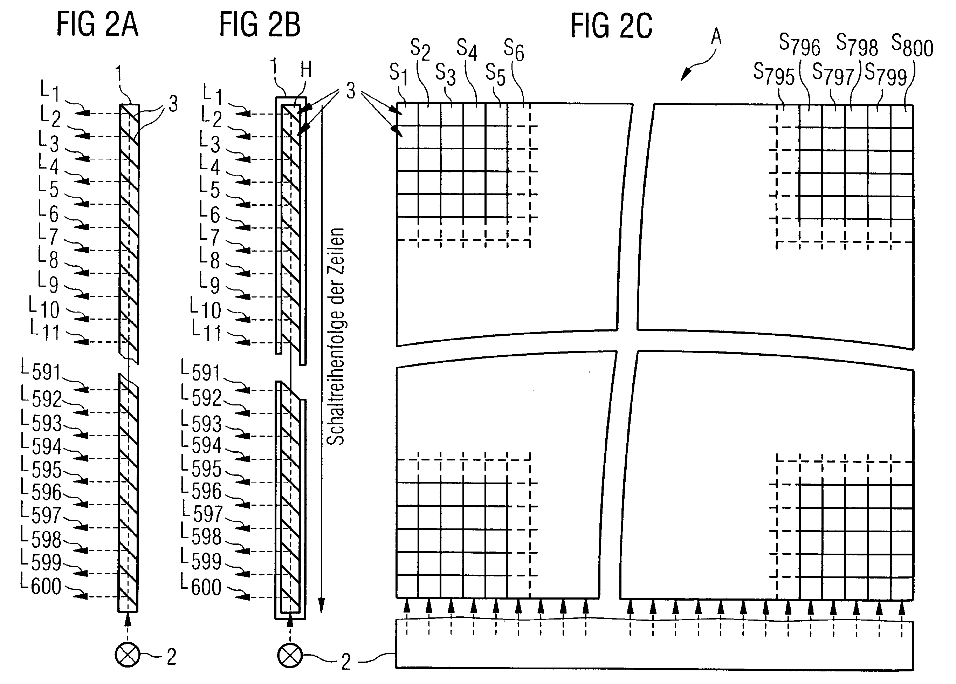

Figuren 2A bis 2C zeigen vereinfachte Schnittansichten bzw. eine vereinfachte Draufsicht der projektionsfreien Anzeigevorrichtung gemäß einem ersten und zweiten Ausführungsbeispiel, wobei gleiche Bezugszeichen gleiche oder entsprechende Elemente bezeichnen und auf eine wiederholte Beschreibung verzichtet wird. Insbesondere ist in den Figuren 2A bis 2C zur Vereinfachung der Darstellung die Ansteuereinheit 4 mit den Ansteuerleitungen 5 nicht dargestellt.

Gemäß Figuren 2A bis 2C ist eine projektionsfreie Anzeigevorrichtung A als Flachdisplay mit einem Anzeigefeld bzw. Array von 800 mal 600 Bildpunkten (Pixeln) bzw. Transmissions-/Reflexionselementen 3 dargestellt. Eine derartige Anzeigevorrichtung realisiert beispielsweise ein durchsichtiges SVGA-Display. Jedes Transmissions-/Reflexionselement bzw. jeder Spiegel 3 entspricht hierbei einem Pixel und kann separat geschaltet bzw. angesteuert werden. Eingeschaltet reflektiert jedes Transmissions-/Reflexionselement 3 das einfallende Licht im Wesentlichen senkrecht zur Lichtführungseinheit 1, während es abgeschaltet das Licht L im Wesentlichen ungehindert passieren lässt. Das von der Beleuchtungseinheit 2 erzeugte Licht, welches seitlich bzw. von unten in die Lichtführungseinheit 1 eingestrahlt wird, durchdringt die unteren Zeilen der Anzeigevorrichtung bis zur obersten Zeile. Erreicht das Licht L die oberste Zeile, so wird es an den von der nicht dargestellten Ansteuereinheit aktivierten Transmissions-/Reflexionselementen 3 dieser Zeile reflektiert und im Wesentlichen senkrecht zur Lichtführungseinheit 1 als Licht L₁ ausgekoppelt. Nacheinander werden nunmehr die Zeilen von 1 bis 600 aktiviert, wodurch ein Bild aufgebaut wird, welches durch eine hohe Bildwiederholrate zum Stehen kommt. Das Prinzip ist somit ähnlich dem NTSC/PAL-Verfahren eines herkömmlichen Fernsehgerätes, bei dem auch das Bild von oben nach unten aufgebaut wird. Entsprechend diesem Verfahren kann das angezeigte Bild auch mit einem sogenannten Interlace-Verfahren dargestellt bzw. angezeigt werden. Die Bildinformationen werden hierbei üblicherweise der Ansteuereinheit zugeführt.

Zur Regelung der Helligkeit jedes einzelnen Bildpunktes bzw. Transmissions-/Reflexionselementes 3 ist in der Regel eine scharfe Trennung zwischen den Spalten bzw. spaltenförmig ausgebildeten und streifenförmigen Lichtführungseinheiten 1 notwendig. Beispielsweise darf kein Licht aus der Spalte S₃ in die Spalte S₂ oder S₄ gelangen. Zur Vermeidung eines Streulichts können beispielsweise die Lichtführungseinheiten 1 der jeweiligen Spalten S₁ bis S₈₀₀ seitlich derart beschichtet sein, dass eine derartige Beeinflussung verhindert ist. Vorzugsweise wird jedoch die Beleuchtungseinheit 2 derart ausgestaltet, dass für jede Lichtführungseinheit 1 eine separate Lichtquelle vorzugsweise integral an der Lichtführungseinheit 1 ausgebildet ist, wobei beispielsweise Laser-Lichtquellen zum Einsatz kommen.

Wie bereits vorstehend angedeutet können die Transmissions-/Reflexionselemente 3 nicht nur zwei Zustände EIN/AUS aufweisen, sondern sich in ihrer Reflektivität beliebig zwischen 0% und 100% einstellen lassen. Insbesondere für durchsichtige Windschutzscheiben erhält man bei einer Einstellung von 50% der Reflektivität auch eine 50%ige Durchlässigkeit der Anzeigevorrichtung. Im Gegensatz dazu könnte bei der Realisierung von Computermonitoren eine Reflektivität auch auf 100% eingestellt werden.

Figur 2A zeigt eine vereinfachte Schnittansicht einer projektionsfreien Anzeigevorrichtung gemäß einem ersten Ausführungsbeispiel, wobei die Lichtführungseinheit 1 ein sogenanntes "Asil-Substrat" aufweist. Derartige Substrate sind beispielsweise aus der Literaturstelle Milan Popovici et al.: "Application specific integrated lenses for displays, Digi-Lense, Ltd, 1060, SID00 digest" bekannt. Hierbei werden die Transmissions-/Reflexionselemente 3 im Wesentlichen durch ansteuerbare Flüssigkristallstrukturen realisiert.

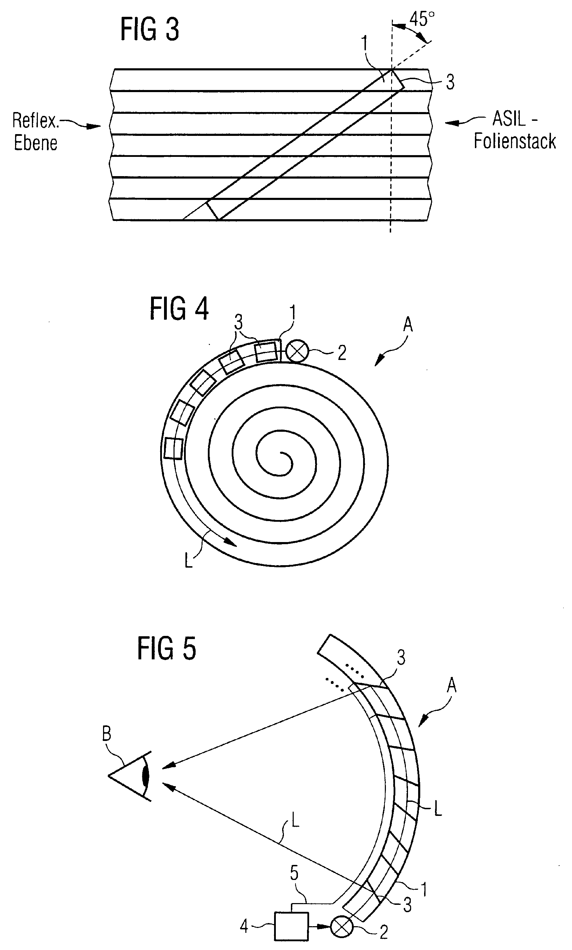

Ein Verfahren zur Herstellung einer derartigen Asil-Lichtführungseinheit 1 ist beispielsweise in Figur 3 dargestellt, wobei eine Vielzahl von Asil-Folien aufeinander gestapelt werden und anschließend aus diesem Asil-Folienstack in einem Winkel von beispielsweise 45° die Lichtführungseinheit 1 mit ihren Transmissions-/Reflexionselementen 3 herausgeschnitten werden kann.

Alternativ kann gemäß Figur 2B die Lichtführungseinheit 1 auch aus einer Vielzahl von lichtdurchlässigen/reflektierenden Mikrospiegeln 3 bestehen, die in einem Hohlraum H angeordnet sind, der beispielsweise von Glas- bzw. Kunststoffseitenwänden eingefasst ist. Die Ansteuerung erfolgt wiederum wie vorstehend beschrieben, wobei in diesem Fall zum Auskoppeln der Lichtstrahlen L₁ bis L₆₀₀ grundsätzlich auch ein mikromechanisches Drehen der Mikrospiegel 3 denkbar ist. Vorzugsweise wird jedoch wiederum der Mikrospiegel in einem festen Winkel eingebaut und lediglich eine Reflektivität durch die nicht dargestellte Ansteuereinheit verändert.

Gemäß dem ersten und zweiten Ausführungsbeispiel wurden eine Vielzahl (800) von streifenförmigen Lichtführungseinheiten 1 spalten- oder zeilenförmig angeordnet und die Transmissions-/Reflexionselemente 3 zeilen- oder spaltenförmig hierzu angesteuert. Grundsätzlich sind jedoch auch andere Anzeigevorrichtungen denkbar.

Figur 4 zeigt eine vereinfachte Draufsicht einer projektionsfreien Anzeigevorrichtung gemäß einem dritten Ausführungsbeispiel, wobei gleiche Bezugszeichen wiederum gleiche oder entsprechende Elemente bezeichnen und auf eine wiederholte Beschreibung verzichtet wird. Insbesondere ist zur Vereinfachung wiederum die Ansteuereinheit 4 nicht dargestellt.

Gemäß Figur 4 kann die streifenförmige Lichtführungseinheit 1 auch spiralförmig angeordnet sein, wodurch beispielsweise mit einer einzigen Lichtführungseinheit 1 eine flächige Anzeigevorrichtung A realisiert werden kann. Wiederum befinden sich im Strahlengang bzw. in der Lichtführungseinheit 1 eine Vielzahl von hintereinander angeordneten Transmissions-/Reflexionselementen 3, die eine Auskopplung von Lichtstrahlen L in Richtung zu einem Betrachter ermöglichen.

Figur 5 zeigt eine vereinfachte Seitenansicht einer projektionsfreien Anzeigevorrichtung A gemäß einem vierten Ausführungsbeispiel, wobei gleiche Bezugszeichen gleiche oder ähnliche Elemente wie in den Figuren 1 bis 4 bezeichnen und auf eine wiederholte Beschreibung nachfolgend verzichtet wird.

Gemäß diesem vierten Ausführungsbeispiel kann die Lichtführungseinheit 1 bzw. die damit realisierte Anzeigevorrichtung A auch eine Oberflächenkrümmung aufweisen, wodurch insbesondere Anzeigevorrichtungen in Brillen, Schutzhelmen usw. realisiert werden können. Grundsätzlich besteht dadurch die Möglichkeit, die Anzeigevorrichtung A in jeder beliebigen Form im dreidimensionalen Raum auszugestalten. Im Gegensatz zu den vorstehenden Ausführungsbeispielen sind bei einer derartigen Oberflächenkrümmung die Transmissions-/Reflexionselemente 3 nicht in einem gleichen Winkel (z.B. 45°) innerhalb der Lichtführungseinheit 1 angeordnet, sondern weisen je nach Oberflächenkrümmung unterschiedliche Positionierungen bzw. Winkel auf.

Um nun ein mehrfarbiges Display realisieren zu können, sind verschiedene Lösungsmöglichkeiten denkbar.

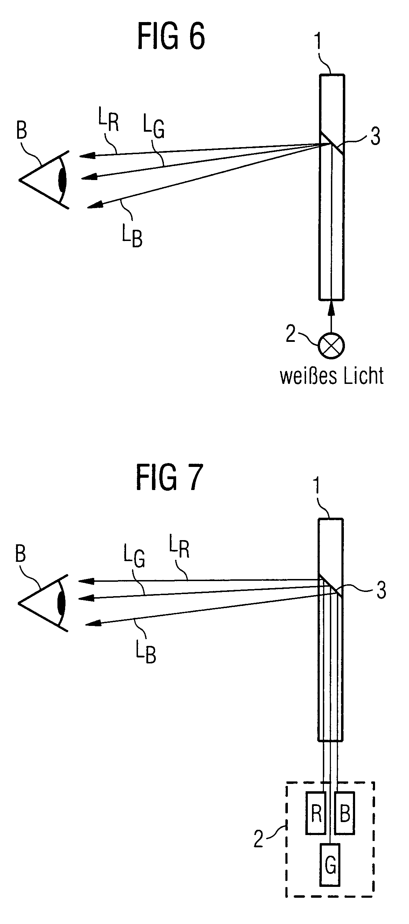

Figur 6 zeigt eine vereinfachte Schnittansicht zur Veranschaulichung einer Farbrealisation in der erfindungsgemäßen Anzeigevorrichtung. Beispielsweise kann als Beleuchtungseinheit 2 eine Lichtquelle verwendet werden, die im Wesentlichen weißes sichtbares Licht ausstrahlt, wobei die Farberzeugung von z.B. roten, grünen und blauen Lichtstrahlen L_{R}, L_{G} und L_{B} im Wesentlichen im Transmissions-/Reflexionselement 3 in Abhängigkeit von einer jeweiligen Ansteuerung erfolgt.

Vorzugsweise wird jedoch eine andere Farbrealisation durchgeführt, wie sie beispielsweise in Figur 7 dargestellt ist. Hierbei besteht jede Beleuchtungseinheit aus einer Laserlichtquelle für rotes, grünes und blaues Licht L_{R}, L_{G} und L_{B} wobei unter Ausnutzung der Trägheit des Auges und des Gehirns aus einer Vielzahl von einfarbigen Einzelbildern ein einziges mehrfarbiges Bild zusammengesetzt wird. Genauer gesagt werden wiederum in Abhängigkeit von der Ansteuerung der Transmissions-/Reflexionselemente 3 die Lichtquellen R, G, B der einzelnen Farben derart "colorsequential" angesteuert, dass abwechselnd ein rotes, grünes oder blaues Bild von der Anzeigevorrichtung A dargestellt wird. Bei genügend hoher Wiederholfrequenz entsteht für den Betrachter aus den roten, grünen und blauen Einzelbildern ein einziges mehrfarbiges Bild, welches wiederum hinsichtlich der Helligkeit in der vorstehend beschriebenen Art und Weise angesteuert werden kann.

Die Erfindung wurde vorstehend anhand eines Flachdisplays für Computermonitore, Windschutzscheiben oder Schutzhelme beschrieben. Sie ist jedoch nicht darauf beschränkt und umfasst in gleicher Weise alle weiteren Einsatzgebiete. Ferner sind neben den vorstehend beschriebnen Asil-Spiegeln bzw. Mikrospiegeln auch andere Transmissions-/Reflexionselemente denkbar, deren Reflektivität selektiv einstellbar ist. Darüber hinaus sind neben der beschriebenen Farbrealisation auch herkömmliche Farbrealisierungen denkbar, bei denen beispielsweise ein angezeigter Farbpunkt aus drei Bildpunkten zusammengesetzt wird.

Auf diese Weise erhält man eine Anzeigevorrichtung, welche gleichzeitig beleuchtet und durchsichtig ist und darüber hinaus eine beliebige Formbarkeit ermöglicht. Die dargestellten Informationen bzw. Bilder sind hierbei gegen störende Einstrahlungen wie z.B. Gegenlicht unempfindlicher.

## Patentansprüche

1. Projektionsfreie Anzeigevorrichtung mit einer Lichtführungseinheit (1) zum Führen von Lichtstrahlen (L);
einer Beleuchtungseinheit (2) zum Erzeugen und Einbringen der Lichtstrahlen (L)in die Lichtführungseinheit (1),
**gekennzeichnet durch**
eine Vielzahl von Transmissions-/Reflexionselementen (3), die seriell im Strahlengang der Lichtführungseinheit (1) angeordnet und zum Auskoppeln der Lichtstrahlen (L) aus der Lichtführungseinheit (1) ansteuerbar sind; und
eine Ansteuereinheit (4, 5) zum selektiven Ansteuern der Vielzahl von Transmissions-/Reflexionselementen (3) derart, dass ein lichtdurchlässiger oder -reflektierender Zustand im Transmissions-/Reflexionselement (3) eingestellt wird.

2. Projektionsfreie Anzeigevorrichtung nach Patentanspruch 1,
**dadurch gekennzeichnet, dass** die Transmissions-/Reflexionselemente (3) die Lichtstrahlen (L) im Wesentlichen senkrecht zur Lichtführungseinheit (1) auskoppeln.

3. Projektionsfreie Anzeigevorrichtung nach Patentansprüchen 1 oder 2,
**dadurch gekennzeichnet, dass** die Transmissions-/Reflexionselemente (3) lichtdurchlässige/reflektierende Mikrospiegel darstellen.

4. Projektionsfreie Anzeigevorrichtung nach einem der Patentansprüche 1 oder 2,
**dadurch gekennzeichnet, dass** die Transmissions-/Reflexionselemente (3) Asil-Spiegel darstellen.

5. Projektionsfreie Anzeigevorrichtung nach einem der Patentansprüche 1 bis 3,
**dadurch gekennzeichnet, dass** die Lichtführungseinheit (1) einen Hohlraum (H) aufweist.

6. Projektionsfreie Anzeigevorrichtung nach einem der Patentansprüche 1 bis 4,
**dadurch gekennzeichnet, dass** die Lichtführungseinheit (1) ein Asil-Substrat aufweist.

7. Projektionsfreie Anzeigevorrichtung nach einem der Patentansprüche 1 bis 6,
**dadurch gekennzeichnet, dass** die Beleuchtungseinheit (2) in die Lichtführungseinheit (1) integriert ist.

8. Projektionsfreie Anzeigevorrichtung nach einem der Patentansprüche 1 bis 7,
**dadurch gekennzeichnet, dass** die Lichtführungseinheit (1) streifenförmig ausgebildet ist.

9. Projektionsfreie Anzeigevorrichtung nach einem der Patentansprüche 1 bis 8,
**dadurch gekennzeichnet, dass** sie eine Vielzahl von spalten- oder zeilenförmig angeordneten Lichtführungseinheiten (1) aufweist und die Transmissions-/Reflexionselemente (3) zeilen- oder spaltenförmig angesteuert werden.

10. Projektionsfreie Anzeigevorrichtung nach einem der Patentansprüche 1 bis 8,
**dadurch gekennzeichnet, dass** sie zumindest eine spiralförmig angeordnete Lichtführungseinheit (1) aufweist.

11. Projektionsfreie Anzeigevorrichtung nach einem der Patentansprüche 1 bis 10,
**dadurch gekennzeichnet, dass** die Lichtführungseinheit (1) lichtdurchlässig ist.

12. Projektionsfreie Anzeigevorrichtung nach einem der Patentansprüche 1 bis 11,
**dadurch gekennzeichnet, dass** die Lichtführungseinheit (1) eine Oberflächenkrümmung aufweist.

13. Projektionsfreie Anzeigevorrichtung nach einem der Patentansprüche 1 bis 12,
**dadurch gekennzeichnet, dass** die Reflektivität der Transmissions-/Reflexionselemente (3) gleichmäßig von 0% bis 100% einstellbar ist.

14. Projektionsfreie Anzeigevorrichtung nach einem der Patentansprüche 1 bis 13,
**dadurch gekennzeichnet, dass** die Beleuchtungseinheit (2) in Abhängigkeit von der Ansteuerung der Transmissions-/Reflexionselemente (3) gesteuert wird.
